# EUROPÄISCHE PATENTSCHRIFT

(11) **EP 0 548 759 B1**
(45) Veröffentlichungstag und Bekanntmachung des Hinweises auf die Patenterteilung: **15.02.1995**
(21) Anmeldenummer: 92121343.5
(22) Anmeldetag: 15.12.1992
(51) Int. Cl.: B27K 3/50

(54) **Mittel oder Konzentrat zum Konservieren von Holz und Holzwerkstoffen**
Agent or concentrate for the preservation of wood and wooden objects
Agent ou concentré pour la conservation du bois et des objets en bois

(30) Priorität: 20.12.1991 DE 4142134
(43) Veröffentlichungstag der Anmeldung: 30.06.1993
(73) Patentinhaber: DESOWAG GmbH, D-40476 Düsseldorf (DE)
(72) Erfinder: Pallaske, Michael, Dr., W-4152 Kempen 1 (DE); Hiller, Johannes Christian, Dr., W-4044 Kaarst 2 (DE); Naczinski, Luzian, W-4005 Meerbusch 3 (DE); Simonin, Jean-Brice, F-75017 Paris (FR); De Reure, Lorin François, F-64480 Ustaritz (FR); Stiefbold, Maurice, F-64200 Bassussarry (FR)
(74) Vertreter: Lauer, Dieter, Dr.

(56) Entgegenhaltungen:
- EP-A- 0 198 165
- EP-A- 0 385 076
- EP-A- 0 413 909
- DE-A- 2 704 066

## Beschreibung

Die vorliegende Erfindung betrifft ein Mittel oder Konzentrat zum Konservieren von Holz und Holzwerkstoffen auf der Basis mindestens eines Insektizides, eines Fungizides, mindestens eines Verdünnungsmittels, eines organisch-chemischen Bindemittels sowie ggf. eines Weichmachers und/oder Fixierungsmittels, Verarbeitungshilfs- oder Zusatzmittels, Farbstoffes oder Pigmentes, wobei das Mittel ein bestimmtes Insektizidgemisch neben einem bestimmten Fungizid bzw. Fungizidgemisch enthält.

Es ist bereits bekannt, die Insektizide 3-Phenoxybenzyl(+)cis, trans-3-(2,2-dichlorvinyl)-2,2-dimethylcyclopropan-1-carboxylat (common name: Permethrin) und 2,2-Dimethyl-3-(2,2-dichlorvinyl)-cyclopropan-1-carbonsäure-α-cyano-3-phenoxybenzylester common name: Cypermethrin) in Holzschutzmitteln einzusetzen.

So wird in der DE-OS 36 13 548 ein Holzschutzmittel beschrieben, das aus einer Kombination eines Aryloxyalkanoles mit einem Pyrethroid besteht. Aus der EP-A-0376665 sind Holzschutzmittel bekannt, die aus einer Kombination eines Carbamats mit einer pyrethroidartigen Verbindung bestehen. Die DE-OS 35 07 400 beschreibt Holzschutzmittel, die neben Tridemorph noch Permethrin als Pyrethroid enthalten.

Das in den bekannten Holzschutzmitteln als Standardinsektizid eingesetzte Pyrethroid Permethrin weist jedoch gegenüber Termiten keine ausreichende Wirksamkeit auf. Es wurde daher nach einer Möglichkeit gesucht, diese Wirksamkeit gegenüber Termiten zu verbessern. Darüber hinaus sollte das Mittel oder Konzentrat eine ausreichende Wirksamkeit gegen holzzerstörende Pilze aufweisen, ohne daß durch den fungiziden Zusatz die Wirksamkeit des Insektizids beeinträchtigt wird.

Erfindungsgemäß wurde festgestellt, daß diese Aufgabe dadurch gelöst werden kann, wenn Permethrin gleichzeitig mit Cypermethrin in dem Holzschutzmittel zum Einsatz gelangt. Es wurde nämlich festgestellt, daß zur termitenwidrigen Ausrüstung von Holz und Holzwerkstoffen üblicherweise eine Auftragsmenge an Cypermethrin allein von mindestens 0,2 g/m² und an Permethrin allein von mindestens 0,8 g/m² erforderlich sind. Mit dem erfindungsgemäß beanspruchten Gemisch der beiden Pyrethroide wird dagegen beispielsweise bei einem Mischungsverhältnis von Cypermethrin zu Permethrin von 1 : 1,5 die gleiche termitizide Wirkung bereits mit 0,1 g/m² Cypermethrin und 0,15 g/m² Permethrin erzielt. Die beanspruchten Werte des Gewichtsverhältnisses von Cypermethrin zu Permethrin variieren in Abhängigkeit von der Termitenart. Besonders vorteilhaft ist ein Verhältnis von Cypermethrin zu Permethrin wie 1 : 1. Es tritt somit eine synergistische Wirkungssteigerung gegenüber Termiten auf, wobei der zusätzliche Vorteil erzielt wird, daß durch die anzuwendende geringere Menge an Cypermethrin als üblich in dem beanspruchten Pyrethroidgemisch eine Kosteneinsparung gegenüber der Anwendung von reinem Cypermethrin erzielt wird. Zwar ist bereits in der DE-OS 27 04 066 ein Insektizidgemisch aus Permethrin und einem weiteren Pyrethroid bekannt, um über den sogenannten "Knock down"-Effekt die Kontaktzeit mit dem Permethrin zu verlängern. Diesem Effekt kommt jedoch auf dem Gebiet des Holzschutzes gegenüber Termiten insofern keine Bedeutung zu, als die Fraßgiftwirkung im Vordergrund steht und nicht die kontaktinsektizide Wirksamkeit. Das als fungizid wirksame Komponente zusammen mit dem beanspruchten Insektizidgemisch erfindungsgemäß eingesetzte, an sich bekannte 1-(4-Chlor-)phenyl-3-hydroxy-3-tert.-butyl-4-(1,2,4triazol-1-yl)-butan und/oder 1-[[2-(2,4-Dichlorphenyl)-4-propyl-1,3-dioxolan-2-yl]methyl]-1H-1,2,4-triazol beeinträchtigt die synergistische Wirksamkeit des Insektizidgemisches nicht.

Das erfindungsgemäße Mittel oder Konzentrat zum Konservieren von Holz und Holzwerkstoffen enthält somit
0,05 bis 4 Gew.-%
eines Insektizidgemisches aus 2,2-Dimethyl-3-(2,2-dichlorvinyl)-cyclopropan-1-carbonsäure-α-cyano-3-phenoxyenzylester und 3-Phenoxybennzyl(+)cis, trans-3-(2,2-dichlorvinyl)-2,2-dimethylcyclopropan-1-carboxylat in einem Gewichtsverhältnis der beiden Bestandteile von 1 : 1,5 bis 1,5 : 1,
0,05 bis 25 Gew.-%
1-(4-Chlor-)phenyl-3-hydroxy-3-tert.-butyl-4-(1,2,4-triazol-1-yl)-butan (common name: Tebuconazol) und/oder 1-[[2-(2,4-Dichlorphenyl)-4-propyl-1,3-dioxolan-2-yl]methyl]-1H-1,2,4-triazol (common name: Propiconazol) und
mehr als 70 Gew.-%
eines Gemisches, bestehend aus mindestens einem organisch-chemischen Bindemittel, mindestens einem Verdünnungsmittel und/oder mindestens einem Emulgator und/oder Netzmittel oder -gemisch derselben.

Gemäß einer vorteilhaften Ausführungsform enthält das Mittel oder Konzentrat
mehr als 90 Gew.-%
des Gemisches, bestehend aus mindestens einem organisch-chemischen Bindemittel, mindestens einem Verdünnungsmittel und/oder mindestens einem Emulgator und/oder Netzmittel oder -gemisch derselben.

Als Verdünnungsmittel wird erfindungsgemäß ein organisch-chemisches Lösungsmittel oder Lösungsmittelgemisch, vorzugsweise ein öliges oder ölartiges schwerflüchtiges organisch-chemisches Lösungsmittel oder Lösungsmittelgemisch oder ein Gemisch aus Wasser und mindestens einem organisch-chemischen Lösungsmittel, vorzugsweise mindestens einem öligen oder ölartigen, schwerflüchtigen, organisch-chemischen Lösungsmittel oder Lösungsmittelgemisch und/oder mindestens einem Emulgator und/oder Netzmittel verwendet.

Als schwerflüchtige organisch-chemische Lösungsmittel gelangen Mineralöle oder deren Aromatenfraktionen oder mineralölhaltige Lösungsmittelgemische, vorzugsweise Testbenzin, Petroleum oder Alkylbenzole zum Einsatz. Besonders bevorzugt werden Mineralöle mit einem Siedebereich von 170 bis 220 °C, Testbenzin mit einem Siedebereich von 170 bis 220 °C, Spindelöl mit einem Siedebereich von 250 bis 350 °C, Petroleum bzw. Aromaten von Siedebereich 160 bis 280 °C, Terpentinöl und dergleichen verwendet.

Gemäß einer anderen Ausführungsform können auch flüssige aliphatische Kohlenwasserstoffe mit einem Siedebereich von 180 bis 210 °C oder hochsiedende Gemische von aromatischen und aliphatischen Kohlenwasserstoffen mit einem Siedebereich von 180 bis 220 °C eingesetzt werden.

Als organisch-chemische Lösungsmittel können je nach Verwendungszweck auch polare organisch-chemische Lösungsmittel wie Hydroxy-, Ether-, Ester- oder Ketogruppen enthaltende Lösemittel oder Lösemittelgemische eingesetzt werden.

Als organisch-chemische Bindemittel werden an sich bekannte wasserverdünnbare oder in den eingesetzten organisch-chemischen Lösungsmitteln lösliche oder dispergier- bzw. emulgierbare Kunstharze und/oder bindende trocknende Öle, insbesondere Bindemittel bestehend aus oder enthaltend Acrylatharz, ein Vinylharz, z.B. Polyvinylacetat, Polyesterharz, Polykondensations- oder Polyaditionsharz, Polyurethanharz, Alkydharz, Siliconharz, trocknende pflanzliche und/oder trocknende Öle und/oder physikalisch trocknende Bindemittel auf der Basis eines Natur- und/oder Kunstharzes verwendet.

Als Bindemittel wird in einer zweckmäßigen Ausführungsform Kunstharz in Form einer Emulsion, Dispersion oder Lösung, vorzugsweise Alkydharz bzw. modifizierte Alkydharze oder Phenolharz und/oder Kohlenwasserstoffharze, vorzugsweise Inden-Cumaronharze, verwendet. Als Bindemittel können auch Bitumen oder bituminöse Substanzen bis zu 10 Gew.-% verwendet werden. Zusätzlich können an sich bekannte Farbstoffe, Pigmente, wasserabweisende Mittel, Geruchskorrigentien und Inhibitoren bzw. Korrosionsschutzmittel und dergleichen eingesetzt werden.

Bevorzugt werden gemäß der Erfindung Alkydharze mit einem Ölgehalt von mehr als 45 Gew.-%, vorzugsweise 50 - 65 Gew.-%, verwendet.

Nach einer Ausführungsform der Erfindung ist das organisch-chemische Bindemittel ganz oder teilweise durch mindestens ein Fixierungsmittel oder mindestens einen Weichmacher ersetzt.

Dabei ist das organisch-chemische Bindemittel oder Bindemittelgemisch von 0 bis zu 75 Gew.-%, vorzugsweise von 0,01 bis zu 35 Gew.-%, (bezogen auf 100 Gew.-% eingesetztes Bindemittel, berechnet als Feststoff) durch die gleiche Gewichtsmenge mindestens eines Fixierungsmittels oder mindestens eines Weichmachers ersetzt.

Als Fixierungsmittel oder Weichmacher werden vor allem solche Verbindungen eingesetzt, die neben einer gewissen Bindung oder Haftung an den Wirkstoff zusätzlich eine Verflüchtigung der Wirkstoffe und/oder eine Kristallisation bzw. Ausfällung verhindern sollen. Vorzugsweise werden
a) Weichmacher, z.B. Alkyl-, Aryl- oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)adipat, Stearate und Oleate, z.B. Alkylstearate oder Alkyloleate, vorzugsweise Butyloleat, Butylstearat oder Amylstearat, Bis-(dimethylbenzyl)-äther, p-Toluolsulfonsäureäthylester, Glycerinester, Glycerinäther oder höhermolekulare Glykoläther und/oder
b) Fixierungsmittel auf der Basis von Ketonen und/oder Polyvinylalkyläthern, z.B. Ketone mit Alkyl-, Aryl- oder Aralkylgruppen, vorzugsweise Benzophenon, Äthylbenzophenon; Polyvinylalkyläther, vorzugsweise Polyvinylmethyläther, verwendet.

Als Emulgatoren werden erfindungsgemäß bevorzugt mindestens eine Seitengruppe enthaltende ethoxylierte Phenole, vorzugsweise ein Polyoxyethylen(10)-Nonylphenol oder eine ethoxylierte Fettsäure oder ein Polyalkylenglykolether eingesetzt.

Das Netzmittel oder Netzmittelgemisch besteht vorzugsweise aus Isopropylamin-dodecylbenzolsulfonat und/oder Polyoxyethylen-Sorbitanlaurat und/oder Sorbitol-Oleatlaurat und/oder Isopropylamin-dodecylbenzolsulfonat und/oder Ca-Alkylarylsulfonat.

Das erfindungsgemäße Mittel zum Konservieren von Holz und Holzwerkstoffen enthält nach einer bevorzugten Ausführungsform das Insektizidgemisch aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat in einem Gewichtsverhältnis der beiden Bestandteile von
1 : 1.

Das erfindungsgemäße Mittel zum Konservieren von Holz und Holzwerkstoffen enthält nach einer Ausführungsform
0,05 bis 0,5 Gew.-%, vorzugsweise
0,1 bis 0,2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat (im erfindungsgemäßen Bereich der Gewichtsverhältnisse der beiden Bestandteile),
0,2 bis 3 Gew.-%, vorzugsweise
0,3 bis 1,5 Gew.-%
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
1,5 bis 7 Gew.-%, vorzugsweise
2 bis 5 Gew.-%
(berechnet als Feststoff) mindestens eines organisch-chemischen Bindemittels und/oder Weichmachers und/oder Fixierungsmittels sowie
98,25 bis 89,5 Gew.-%, vorzugsweise
97,6 bis 93,3 Gew.-%
eines Verdünnungsmittels und/oder Emulgators und/oder Netzmittels.

Nach einer bevorzugten Ausführungsform enthält das erfindungsgemäße Mittel zum Konservieren von Holz und Holzwerkstoffen
0,05 bis 0,5 Gew.-%, vorzugsweise
0,1 bis 0,2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat in einem Gewichtsverhältnis der beiden Bestandteile von
1 : 1,5 bis 1,5 : 1, vorzugsweise
1 : 1,
0,2 bis 3 Gew.-%, vorzugsweise
0,3 bis 1,5 Gew.-%
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
1,5 bis 7 Gew.-%, vorzugsweise
2 bis 5 Gew.-%
(berechnet als Feststoff) mindesten eines organisch-chemischen Bindemittels und/oder Weichmachers und/oder Fixierungsmittels,
0 bis 2 Gew.-%, vorzugsweise
0,01 bis 1 Gew.-%
mindestens eines wasserlöslichen und/oder wasserunlöslichen Farbstoffes, Farbpigmentes und/oder Korrosionsschutzmittels, Sikkatives und/oder UV-Stablisators und
98,25 bis 87,5 Gew.-%, vorzugsweise
97,6 bis 92,3 Gew.-%
eines Verdünnungsmittels, bestehend aus einem organisch-chemischen Lösungsmittel oder Lösungsmittelgemisch oder einem Gemisch aus Wasser und einem organisch-chemischen Lösungsmittel oder Lösungsmittelgemisch und mindestens einem Emulgator und/oder Netzmittel.

Das erfindungsgemäße Konzentrat zum Konservieren von Holz und Holzwerkstoffen enthält
0,15 bis 4 Gew.-%, vorzugsweise
0,3 bis 2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan1-carboxylat,
0,2 bis 25 Gew.-%, vorzugsweise
3 bis 8 Gew.-%,
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
3,5 bis 50 Gew.-%, vorzugsweise
10 bis 35 Gew.-%
mindestens eines organisch-chemischen Bindemittels und/oder Fixierungsmittels oder Weichmachers sowie einen Restbestandteil, bestehend aus einem organisch-chemischen Lösungsmittel oder Lösungsmittelgemisch und mindestens einem Emulgator und/oder Netzmittel sowie gegebenenfalls Farbstoffen, Farbpigmenten, Korrosionsschutznmitteln, Sikkativen und/oder Stabilisatoren.

Nach einer bevorzugten Ausführungsform enthält das erfindungsgemäße Konzentrat
0,15 bis 4 Gew.-%, vorzugsweise
0,3 bis 2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-carboxylat in einem Gewichtsverhältnis der beiden Bestandteile von
1 : 1,5 bis 1,5 : 1, vorzugsweise
1 : 1,
0,2 bis 25 Gew.-%, vorzugsweise
3 bis 8 Gew.-%
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
3,5 bis 50 Gew.-%, vorzugsweise
10 bis 35 Gew.-%
mindestens eines organisch-chemischen Bindemittels und/oder Fixierungsmittels oder Weichmachers sowie einem Restbestandteil, bestehend aus einem organisch-chemischen Lösungsmittel oder Lösungsmittelgemisch oder Wasser und einem organisch-chemischen Lösungsmittel oder Lösungsmittelgemisch und mindestens einem Emulgator und/oder Netzmittel sowie gegebenenfalls Farbstoffen, Farbpigmenten, Korrosionsschutzmitteln, Sikkativen und/oder UV-Stabilisatoren.

Gemäß einer weiteren Ausführungsform ist im erfindungsgemäßen Mittel oder Konzentrat das 1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
von 0 bis 50 Gew.-%, vorzugsweise
von 0,5 bis 25 Gew.-%
(bezogen auf 100 Gew.-% eingesetztes 1-(4-Chlor-)phenyl-3-hydroxy-3-tert.-butyl-4-(1,2,4-triazol-1-yl)-butan oder 1-[[2-(2,4-Dichlorphenyl)-4-propyl-1,3-dioxolan-2-yl]methyl]-1H-1,2,4-triazol durch die gleiche Gewichtsmenge eines anderen Fungizids, vorzugsweise Dialkyl (C₁₀-C₁₈) Alkyl (C₁-C₅)benzylammoniumhalogenid oder Alkyl(C₁₀-C₁₈) Dialkyl(C₁-C₅)benzylammoniumhalogenid ersetzt.

Jedoch können auch fungizide zinnorganische Verbindungen zum Einsatz gelangen wie Tributylbenzoat, Tributylzinnoktoat, Tris(tributylzinn)phosphat oder Bis(tributylzinn)oxid.

Das erfindungsgemäße Mittel oder Konzentrat wird auf die Holzoberfläche in einer Menge von ca. 200 g/m² des anwendungsfertigen Mittels oder eines entsprechenden Bruchteils dieser Menge an Konzentrat nach an sich bekannten Verfahren wie Streichen, Spritzen, Sprühen oder unter Anwendung von Imprägnierverfahren wie Tauch-, Druck-, Vakuum- oder Doppelvakuumverfahren aufgebracht.

| Beispiele für das erfindungsgemäße Mittel oder Konzentrat | | | | | | |
|---|---|---|---|---|---|---|
| Beispiel | Nr. 1 | Nr. 2 | Nr. 3 | Nr. 4 | Nr. 5 | |
| Cypermethrin | 0,2 | 0,35 | 0,06 | 0,03 | 0,2 | % |
| Permethrin | 0,2 | 0,53 | 0,08 | 0,03 | 0,3 | % |
| Tebuconazol | 1,2 | 2,8 | - | 0,75 | 3,- | % |
| Propiconazol | - | - | 1,5 | - | - | % |
| Wasserverdünnbares Alkydharz (60 %-ig in Butylglykol) | 9,- | - | - | - | - | % |
| Öllösliches Alkydharz | - | - | - | 15,- | 40,- | % |
| Butylphthalat | - | 17,5 | 2,5 | - | - | % |
| Ethoxiliertes Nonylphenol | 15,- | 35,7 | 6,5 | - | - | % |
| Testbenzin | - | - | - | 81,89 | 56,1 | % |
| Pyment (Eisenoxid) | - | - | - | 2,- | - | % |
| Sikkative, Antiabsetzmittel | - | - | - | 0,3 | 0,4 | % |
| Wasser | 74,4 | 43,12 | 89,36 | - | - | % |
| Abmischung mit Wasser | 1 : 2 | 1 : 6 | - | - | - | |
| Abmischung mit Testbenzin | - | - | - | - | 1 : 3 | |

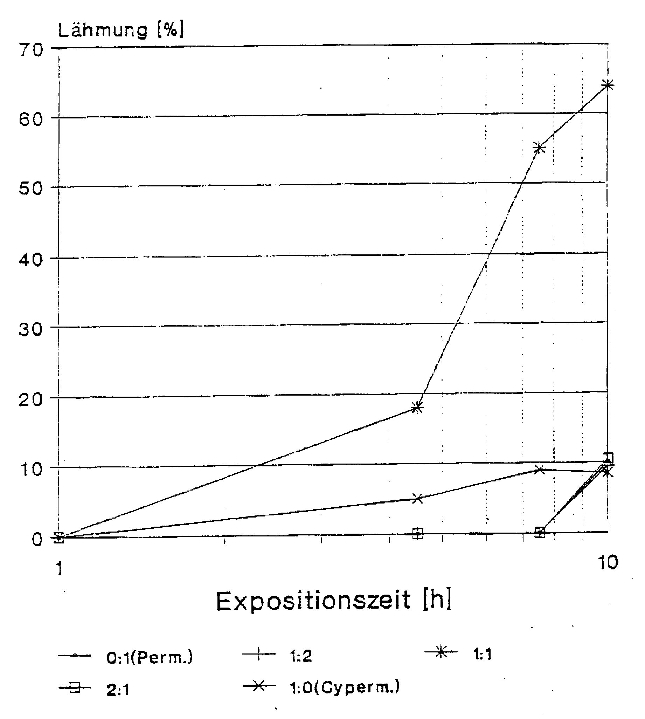

In der beigefügten Zeichnung ist die synergistische Wirksamkeit (Fraßgiftwirkung; Fraßtest mit Brettchen) der Kombination von Cypermethrin und Permethrin innerhalb des erfindungsgemäß bevorzugt beanspruchten Gewichtsverhältnisses von 1 : 1 (-*-) gegen Termiten der Art Heterotermes indicola im Vergleich mit Cypermethrin allein (-x-) und mit Permethrin allein (-.-) dargestellt. Zusätzlich sind noch Werte der nichtbeanspruchten Gewichtsverhältnisse der Kombination Cypermethrin/Permethrin 2 : 1 (-□-) sowie Cypermethrin/Permethrin 1 : 2 ( -|-) eingetragen, aus denen hervorgeht, daß bei diesen Gewichtsverhältnissen kein Synergismus auftritt.

## Patentansprüche

1. Mittel oder Konzentrat zum Konservieren von Holz und Holzwerkstoffen auf der Basis mindestens eines Insektizides, mindestens eines Verdünnungsmittels, mindestens eines organisch-chemischen Bindemittels, eines Weichmachers und/oder Fixierungsmittels sowie mindestens eines Fungizides sowie ggf. eines Verarbeitungshilfs- oder Zusatzmittels, Farbstoffes, Pigmentes, Farbstoff- oder Pigmentgemisches, dadurch gekennzeichnet, daß das Mittel oder Konzentrat
0,05 bis 4 Gew.-%
eines Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat in einem Gewichtsverhältnis der beiden Bestandteile von 1 : 1,5 bis 1,5 : 1,
0,05 bis 25 Gew.-%
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol und
mehr als 70 Gew.-%
eines Gemisches, bestehend aus mindestens einem organisch-chemischen Bindemittel und mindestens einem Verdünnungsmittel und/oder mindestens einem Emulgator und/oder Netzmittel oder -gemisch derselben, enthält.

2. Mittel oder Konzentrat nach Anspruch 1, dadurch gekennzeichnet, daß das Mittel oder Konzentrat
mehr als 90 Gew.-%
des Gemisches, bestehend aus mindestens einem organisch-chemischen Bindemittel und mindestens einem Verdünnungsmittel und/oder mindestens einem Emulgator und/oder Netzmittel oder -Gemisch derselben, enthält.

3. Mittel oder Konzentrat nach Ansprüchen 1 und 2, dadurch gekennzeichnet, daß das Verdünnungsmittel ein organisch-chemisches Lösungsmittel oder Lösungsmittelgemisch, vorzugsweise ein öliges oder ölartiges schwerflüchtiges organisch-chemisches Lösungsmittel oder Lösungsmittelgemisch oder ein Gemisch aus Wasser und mindestens einem organisch-chemischen Lösungsmittel, vorzugsweise mindestens einem öligen oder ölartigen, schwerflüchtigen, organisch-chemischen Lösungsmittel oder Lösungsmittelgemisch und/oder mindestens einem Emulgator und/oder Netzmittel enthält oder daraus besteht.

4. Mittel oder Konzentrat nach einem oder mehreren der Ansprüche 1 bis 3, dadurch gekennzeichnet, daß das organisch-chemische Bindemittel ganz oder teilweise durch mindestens ein Fixierungsmittel oder mindestens einen Weichmacher ersetzt ist.

5. Mittel oder Konzentrat zum Konservieren von Holz und Holzwerkstoffen nach einem oder mehreren der Ansprüche 1 bis 4, dadurch gekennzeichnet, daß das Mittel oder Konzentrat das Insektizidgemisch aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat in einem Gewichtsverhältnis der beiden Bestandteile von
1 : 1
enthält.

6. Mittel oder Konzentrat zum Konservieren von Holz und Holzwerkstoffen nach einem oder mehreren der Ansprüche 1 bis 5, dadurch gekennzeichnet, daß das Mittel (das anwendungsfertige Mittel)
0,05 bis 0,5 Gew.-%, vorzugsweise
0,1 bis 0,2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat,
0,2 bis 3 Gew.-%, vorzugsweise
0,3 bis 1,5 Gew.-%
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
1,5 bis 7 Gew.-%, vorzugsweise
2 bis 5 Gew.-%
(berechnet als Feststoff) mindestens eines organisch-chemischen Bindemittels und/oder Weichmachers und/oder Fixierungsmittels sowie
98,25 bis 89,5 Gew.-%, vorzugsweise
97,6 bis 93,3 Gew.-%
eines Verdünnungsmittels und/oder Emulgators und/oder Netzmittels enthält.

7. Mittel zum Konservieren von Holz und Holzwerkstoffen nach einem oder mehreren der Ansprüche 1 bis 6, dadurch gekennzeichnet, daß das Mittel (anwendungsfertige Mittel)
0,05 bis 0,5 Gew.-%, vorzugsweise
0,1 bis 0,2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat in einem Gewichtsverhältnis der beiden Bestandteile von
1 : 1,5 bis 1,5 : 1, vorzugsweise
1 : 1,
0,2 bis 3 Gew.-%, vorzugsweise
0,3 bis 1,5 Gew.-%
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
1,5 bis 7 Gew.-%, vorzugsweise
2 bis 5 Gew.-%
(berechnet als Feststoff) mindestens eines organisch-chemischen Bindemittels und/oder Weichmachers und/oder Fixierungsmittels,
0 bis 2 Gew.-%, vorzugsweise
0,01 bis 1 Gew.-%
mindestens eines wasserlöslichen und/oder wasserunlöslichen Farbstoffes, Farbpigmentes und/oder Korrosionsschutzmittels, Sikkatives und/oder UV-Stabilisators und
98,25 bis 87,5 Gew.-%, vorzugsweise
97,6 bis 92,3 Gew.-%
eines Verdünnungsmittels, bestehend aus einem organisch-chemischen Lösungsmittel oder Lösungsmittelgemisch oder einem Gemisch aus Wasser und einem organisch-chemischen Lösungsmittels oder Lösungsmittelgemisch und mindestens einem Emulgator und/oder Netzmittels enthält.

8. Konzentrat zum Konservieren von Holz und Holzwerkstoffen nach einem oder mehreren der Ansprüche 1 bis 5, dadurch gekennzeichnet, daß das Konzentrat
0,15 bis 4 Gew.-%, vorzugsweise
0,3 bis 2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropan-1-carboxylat,
0,2 bis 25 Gew.-%, vorzugsweise
3 bis 8 Gew.-%,
1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
3,5 bis 50 Gew.-%, vorzugsweise
10 bis 35 Gew.-%
mindestens eines organisch-chemischen Bindemittels und/oder Fixierungsmittels oder Weichmachers sowie einen Restbestandteil, bestehend aus einem organisch-chemischen Lösungsmittel oder Lösungsmittelgemisch oder Wasser und einem organisch-chemischen Lösungsmittel oder Lösungsmittelgemisch und mindestens einem Emulgator und/oder Netzmittel sowie gegebenenfalls Farbstoffen, Farbpigmenten, Korrosionsschutzmitteln, Sikkativen und/oder Stabilisatoren enthält.

9. Konzentrat zum Konservieren von Holz und Holzwerkstoffen nach einem oder mehreren der Ansprüche 1 bis 5 und 8, dadurch gekennzeichnet, daß das Konzentrat
0,15 bis 4 Gew.-%, vorzugsweise
0,3 bis 2 Gew.-%
des Insektizidgemisches aus 2,2-Dimethyl-3-(2,2-dichlorvinyl)-cyclopropan-1-carbonsäure-α-cyano-3-phenoxybenzylester und 3-Phenoxybenzyl(+)cis, trans-3-(2,2-dichlorvinyl)-2,2-dimethylcyclopropancarboxylat in einem Gewichtsverhältnis der beiden Bestandteile von
1 : 1,5 bis 1,5 : 1, vorzugsweise
1 : 1,
0,2 bis 25 Gew.-%, vorzugsweise
3 bis 8 Gew.-%
1-(4-Chlor-)phenyl-3-hydroxy-3-tert.-butyl-4-(1,2,4-triazol-1-yl)-butan und/oder 1-[C2-(2,4-Dichlorphenyl)-4-propyl-1,3-dioxolan-2-yl]methyl]-1H-1,2,4-triazol,
3,5 bis 50 Gew.-%, vorzugsweise
10 bis 35 Gew.-%
mindestens eines organisch-chemischen Bindemittels und/oder Fixierungsmittels oder Weichmachers sowie einem Restbestandteil, bestehend aus einem organisch-chemischen Lösungsmittel oder Lösungsmittelgemisch oder Wasser und einem organisch-chemischen Lösungsmittel oder Lösungsmittelgemisch und mindestens einem Emulgator und/oder Netzmittel sowie egebenenfalls Farbstoffen Farbpigmenten, Korrosionsschutzmitteln, Sikkativen und oder UV-Stabilisatoren, enthält.

10. Mittel oder Konzentrat zum Konservieren von Holz und Holzwerkstoffen nach einem oder mehreren der Ansprüche 1 bis 9, dadurch gekennzeichnet, daß das 1-(4-Chlor-)phenyl-3-hydroxy-3-tert.-butyl-4-(1,2,4-triazol-1-yl)-butan und/oder 1-[[2-(2,4-Dichlorphenyl)-4-propyl-1,3-dioxolan-2-yl]methyl]-1H-1,2,4-triazol,
von 0 bis 50 Gew.-%, vorzugsweise
von 0,5 bis 25 Gew.-%
(bezogen auf 100 Gew.-% eingesetztes 1-(4-Chlor-)phenyl-3-hydroxy-3-tert.-butyl-4-(1,2,4-triazol-1-yl)-butan oder 1-[[2-(2,4-Dichlorphenyl)-4-propyl-1,3-dioxolan-2-yl]methyl]-1H-1,2,4-triazoldurch die gleiche Gewichtsmenge eines anderen Fungizids, vorzugsweise Dialkyl(C₁₀-C₁₈)Alkyl(C₁-C₅)benzylammoniumhalogenid oder Alkyl(C₁₀-C₁₈)Dialkyl(C₁-C₅)benzylammoniumhalogenid ersetzt ist.

11. Verfahren zum Konservieren von Holz und Holzwerkstoffen, dadurch gekennzeichnet, daß auf die Holzoberfläche ca. 200 g/m² des Mittels oder ein entsprechender Bruchteil dieser Menge des Konzentrats nach einem oder mehreren der Ansprüche 1 bis 10 aufgebracht werden.

## Claims

1. An agent or concentrate for preserving wood and timber materials on the basis of at least one insecticide, at least one diluent, at least one organic-chemical binder, a softener and/or fixing agent and at least one fungicide and also optionally a processing aid or additive, dye, pigment, dye or pigment mixture, characterised in that the agent or concentrate contains
0.05 to 4% by weight
of an insecticide mixture consisting of 2,2-dimethyl-3-(2,2-dichlorovinyl)-cyclopropane-1-carboxylic acid-α-cyano-3-phenoxy benzyl ester and 3-phenoxybenzyl(+)cis, trans-3-(2,2-dichlorovinyl)-2,2-dimethylcyclopropane-1-carboxylate in a weight ratio of the two constituents of 1 : 1.5 to 1.5 : 1,
0.05 to 25% by weight
1-(4-chloro-)phenyl-3-hydroxy-3-tert.-butyl-4-(1,2,4-triazol-1-yl)-butane and/or 1-[[2-(2,4-dichlorophenyl)-4-propyl-1,3-dioxolan-2-yl]methyl]-1H-1,2,4-triazole and
more than 70% by weight
of a mixture, consisting of at least one organic-chemical binder and at least one diluent and/or at least one emulsifier and/or wetting agent or mixture thereof.

2. An agent or concentrate according to Claim 1, characterised in that the agent or concentrate contains
more than 90% by weight
of the mixture, consisting of at least one organic-chemical binder and at least one diluent and/or at least one emulsifier and/or wetting agent or mixture thereof.

3. An agent or concentrate according to Claims 1 and 2, characterised in that the diluent contains or consists of an organic-chemical solvent or solvent mixture, preferably an oily or oil-like, sparingly volatile organic-chemical solvent or solvent mixture, or a mixture of water and at least one organic-chemical solvent, preferably at least one oily or oil-like, sparingly volatile, organic-chemical solvent or solvent mixture and/or at least one emulsifier and/or wetting agent.

4. An agent or concentrate according to one or more of Claims 1 to 3, characterised in that the organic-chemical binder is completely or partly replaced by at least one fixing agent or at least one softener.

5. An agent or concentrate for preserving wood and timber materials according to one or more of Claims 1 to 4, characterised in that the agent or concentrate contains the insecticide mixture of 2,2-dimethyl-3-(2,2-dichlorovinyl)-cyclopropane-1-carboxylic acid-α-cyano-3-phenoxy benzyl ester and 3-phenoxybenzyl(+)cis, trans-3-(2,2-dichlorovinyl)-2,2-dimethylcyclopropane-1-carboxylate in a weight ratio of the two constituents of
1 : 1.

6. An agent or concentrate for preserving wood and timber materials according to one or more of Claims 1 to 5, characterised in that the agent (the agent ready for use) contains
0.05 to 0.5% by weight, preferably
0.1 to 0.2% by weight,
of the insecticide mixture of 2,2-dimethyl-3-(2,2-dichlorovinyl)-cyclopropane-1-carboxylic acid-α-cyano-3-phenoxy benzyl ester and 3-phenoxybenzyl(+)cis, trans-3-(2,2-dichlorovinyl)-2,2-dimethylcyclopropane-1-carboxylate,
0.2 to 3% by weight, preferably
0.3 to 1.5% by weight,
1-(4-chloro-)phenyl-3-hydroxy-3-tert.-butyl-4-(1,2,4-triazol-1-yl)-butane and/or 1-[[2-(2,4-dichlorophenyl)-4-propyl-1,3-dioxolan-2-yl]methyl]-1H-1,2,4-triazole,
1.5 to 7% by weight, preferably
2 to 5% by weight,
(calculated as solid) of at least one organic-chemical binder and/or softener and/or fixing agent and
98.25 to 89.5% by weight, preferably
97.6 to 93.3% by weight,
of a diluent and/or emulsifier and/or wetting agent.

7. An agent for preserving wood and timber materials according to one or more of Claims 1 to 6, characterised in that the agent (agent ready for use) contains
0.05 to 0.5% by weight, preferably
0.1 to 0.2% by weight,
of the insecticide mixture of 2,2-dimethyl-3-(2,2-dichlorovinyl)-cyclopropane-1-carboxylic acid-α-cyano-3-phenoxy benzyl ester and 3-phenoxybenzyl(+)cis, trans-3-(2,2-dichlorovinyl)-2,2-dimethylcyclopropane-1-carboxylate in a weight ratio of the two constituents of
1 : 1.5 to 1.5 : 1, preferably
1 : 1,
0.2 to 3% by weight, preferably
0.3 to 1.5% by weight,
1-(4-chloro-)phenyl-3-hydroxy-3-tert.-butyl-4-(1,2,4-triazol-1-yl)-butane and/or 1-[[2-(2,4-dichlorophenyl)-4-propyl-1,3-dioxolan-2-yl]methyl]-1H-1,2,4-triazole,
1.5 to 7% by weight, preferably
2 to 5% by weight,
(calculated as solid) of at least one organic-chemical binder and/or softener and/or fixing agent,
0 to 2% by weight, preferably
0.01 to 1% by weight,
of at least one water-soluble and/or water-insoluble dye, coloured pigment and/or anti-corrosion agent, siccative and/or UV stabiliser, and
98.25 to 87.5% by weight, preferably
97.6 to 92.3% by weight,
of a diluent, consisting of an organic-chemical solvent or solvent mixture or a mixture of water and an organic-chemical solvent or solvent mixture and at least one emulsifier and/or wetting agent.

8. A concentrate for preserving wood and timber materials according to one or more of Claims 1 to 5, characterised in that the concentrate contains
0.15 to 4% by weight, preferably
0.3 to 2% by weight,
of the insecticide mixture consisting of 2,2-dimethyl-3-(2,2-dichlorovinyl)-cyclopropane-1-carboxylic acid-α-cyano-3-phenoxy benzyl ester and 3-phenoxybenzyl(+)cis, trans-3-(2,2-dichlorovinyl)-2,2-dimethylcyclopropane-1-carboxylate,
0.2 to 25% by weight, preferably
3 to 8% by weight,
1-(4-chloro-)phenyl-3-hydroxy-3-tert.-butyl-4-(1,2,4-triazol-1-yl)-butane and/or 1-[[2-(2,4-dichlorophenyl)-4-propyl-1,3-dioxolan-2-yl]methyl]-1H-1,2,4-triazole,
3.5 to 50% by weight, preferably
10 to 35% by weight,
of at least one organic-chemical binder and/or fixing agent or softener and a remaining constituent, consisting of an organic-chemical solvent or solvent mixture or water and an organic-chemical solvent or solvent mixture and at least one emulsifier and/or wetting agent, and also optionally dyes, coloured pigments, anti-corrosion agents, siccatives and/or stabilisers.

9. A concentrate for preserving wood and timber materials according to one or more of Claims 1 to 5 and 8, characterised in that the concentrate contains
0.15 to 4% by weight, preferably
0.3 to 2% by weight,
of the insecticide mixture consisting of 2,2-dimethyl-3-(2,2-dichlorovinyl)-cyclopropane-1-carboxylic acid-α-cyano-3-phenoxy benzyl ester and 3-phenoxybenzyl(+)cis, trans-3-(2,2-dichlorovinyl)-2,2-dimethylcyclopropane-1-carboxylate in a weight ratio of the two constituents of
1 : 1.5 to 1.5 : 1, preferably
1 : 1,
0.2 to 25% by weight, preferably
3 to 8% by weight,
1-(4-chloro-)phenyl-3-hydroxy-3-tert.-butyl-4-(1,2,4-triazol-1-yl)-butane and/or 1-[[2-(2,4-dichlorophenyl)-4-propyl-1,3-dioxolan-2-yl]methyl]-1H-1,2,4-triazole,
3.5 to 50% by weight, preferably
10 to 35% by weight,
of at least one organic-chemical binder and/or fixing agent or softener and a remaining constituent, consisting of an organic-chemical solvent or solvent mixture or water and an organic-chemical solvent or solvent mixture and at least one emulsifier and/or wetting agent, and also optionally dyes, coloured pigments, anti-corrosion agents, siccatives and/or UV stabilisers.

10. An agent or concentrate for preserving wood and timber materials according to one or more of Claims 1 to 9, characterised in that
from 0 to 50% by weight, preferably
from 0.5 to 25% by weight,
(relative to 100% by weight 1-(4-chloro-)phenyl-3-hydroxy-3-tert.-butyl-4-(1,2,4-triazol-1-yl)-butane or 1-[[2-(2,4-dichlorophenyl)-4-propyl-1,3-dioxolan-2-yl]methyl]-1H-1,2,4-triazole used) of the 1-(4-chloro-)phenyl-3-hydroxy-3-tert.-butyl-4-(1,2,4-triazol-1-yl)-butane and/or 1-[[2-(2,4-dichlorophenyl)-4-propyl-1,3-dioxolan-2-yl]methyl]-1H-1,2,4-triazole is replaced by the same amount by weight of another fungicide, preferably dialkyl(C₁₀-C₁₈) alkyl(C₁-C₅) benzylammonium halide or alkyl(C₁₀-C₁₈) dialkyl(C₁-C₅) benzylammonium halide.

11. A method for preserving wood and timber materials, characterised in that approximately 200 g/m² of the agent or a corresponding fraction of this quantity of the concentrate according to one or more of Claims 1 to 10 is applied to the wood surface.

## Revendications

1. Agent ou concentré pour la conservation du bois et objets ou matériaux en bois, à base d'au moins un insecticide, d'au moins un diluant, d'au moins un liant organique chimique, d'un plastifiant et/ou d'un agent de fixation ainsi que d'au moins un fongicide et éventuellement d'un adjuvant de mise en oeuvre ou d'un additif, d'un colorant, d'un pigment, d'un mélange de colorants ou de pigments, agent ou concentré caractérisé en ce qu'il contient
0,05 à 4 % en poids
d'un mélange d'insecticides formé de l'ester α-cyano-3-phénoxybenzylique de l'acide 2,2-diméthyl-3-(2,2-dichlorovinyl)-cyclopropane-1-carboxylique et de (+) cis, trans-3-(2,2-dichlorovinyl)-2,2-diméthylcyclopropane-1-carboxylate de 3-phénoxybenzyle, selon un rapport pondéral des deux constituants allant de 1:1,5 à 1,5:1,
0,05 à 25 % en poids
de 1-(4-chloro)-phényl-3-hydroxy-3-tert.-butyl-4-(1,2,4-triazol-1-yl)-butane et/ou de 1-[[2-(2,4-dichlorophényl)propyl-1,3-dioxolanne-2-yl]méthyl]-1H-1,2,4-triazole, et
de plus de 70 % en poids
d'un mélange consistant en au moins un liant organique chimique et au moins un diluant et/ou au moins un émulsifiant et/ou un mouillant ou un mélange de leurs mélanges.

2. Agent ou concentré selon la revendication 1, caractérisé en ce que l'agent ou le concentré contient
plus de 90 % en poids
du mélange constitué par au moins un liant organique chimique et au moins un diluant et/ou au moins un émulsifiant et/ou un mouillant et/ou un de leurs mélanges.

3. Agent ou concentré selon les revendications 1 et 2, caractérisé en ce que le diluant contient, ou consiste en, un solvant ou un mélange de solvants organique(s) chimique(s), avantageusement un solvant ou un mélange de solvants organique(s) chimique(s) peu volatil(s), huileux ou oléiforme(s), ou un mélange d'eau et d'au moins un solvant organique chimique, avantageusement au moins un solvant ou un mélange de solvants organique(s) chimique(s) peu volatil(s), huileux ou oléiforme(s) et/ou au moins un émulsifiant et/ou un mouillant.

4. Agent ou concentré selon une ou plusieurs des revendications 1 à 3, caractérisé en ce que le liant organique chimique est remplacé, entièrement ou partiellement, par au moins un agent de fixation ou au moins un plastifiant.

5. Agent ou concentré pour la conservation du bois et des matériaux ou objets en bois, selon une ou plusieurs des revendications 1 à 4, caractérisé en ce que l'agent ou le concentré contient le mélange des insecticides formé par l'ester α-cyano-3-phénoxybenzylique de l'acide 2,2-diméthyl-3-(2,2-dichlorovinyl)-cyclopropane-1-carboxylique et le (+)cis, trans-3-(2,2-dichlorovinyl)-2,2-diméthylcyclopropane-1-carboxylate de 3-phénoxybenzyle, selon un rapport pondéral des deux constituants de 1:1.

6. Agent ou concentré pour la conservation du bois et des objets ou matériaux en bois, selon une ou plusieurs des revendications 1 à 5, caractérisé en ce que l'agent prêt à l'emploi contient :
0,05 à 0,5 % en poids, avantageusement
0,1 à 0,2 % en poids
du mélange des insecticides formé par l'ester α-cyano-3-phénoxybenzylique de l'acide 2,2-diméthyl-3(2,2-dichlorovinyl)-cyclopropane-1-carboxylique et du (+)cis, trans-3-(2,2-dichlorovinyl)-2,2-diméthylcyclopropane-1-carboxylate de 3-phénoxybenzyle,
0,2 à 3 % en poids, avantageusement
0,3 à 1,5 % en poids
de 1-(4-chloro)-phényl-3-hydroxy-3-tert.-butyl-4-(1,2,4-triazol-1-yl)-butane et/ou de 1-[[2-(2,4-dichlorophényl)-4-propyl-1,3-dioxolanne-2-yl]méthyl]-1H-1,2,4-triazole,
1,5 à 7 % en poids, avantageusement
2 à 5 % en poids,
(calculé en solides) d'au moins un liant organique chimique et/ou un plastifiant et/ou un agent de fixation, ainsi que
98,25 à 89,5 % en poids, avantageusement
97,6 à 93,3 % en poids
d'un diluant et/ou d'un émulsifiant et/ou d'un mouillant.

7. Agent pour la conservation du bois et des matériaux ou objets en bois selon une ou plusieurs des revendications 1 à 6, caractérisé en ce que l'agent (agent prêt à l'emploi) contient :
0,05 à 0,5 % en poids, avantageusement
0,1 à 0,2 % en poids
du mélange des insecticides formé par l'ester α-cyano-3-phénoxybenzylique de l'acide 2,2-diméthyl-3-(2,2-dichlorovinyl)-cyclopropane-1-carboxylique et le (+)cis, trans-3-(2,2-dichlorovinyl)-2,2-diméthylcyclopropane-1-carboxylate de 3-phénoxybenzyle, selon un rapport pondéral entre les deux constituants valant
1:1,5 à 1,5:1, avantageusement
1:1 ,
0,2 à 3 % en poids, avantageusement
0,3 à 1,5 % en poids
de 1-(4-chloro-)-phényl-3-hydroxy-3-tert.-butyl-4-(1,2,4-triazol-1-yl)-butane et/ou de 1-[[2-(2,4-dichlorophényl)-4-propyl-1,3-dioxolanne-2-yl]méthyl]-1H-1,2,4-triazole,
1,5 à 7 % en poids, avantageusement
2 à 5 % en poids
(calculé en solides) d'au moins un liant organique chimique et/ou d'un plastifiant et/ou d'un agent de fixation,
0 à 2 % en poids, avantageusement
0,01 à 1 % en poids
d'au moins un colorant hydrosoluble et/ou insoluble dans l'eau, d'un pigment coloré et/ou d'un agent de protection contre la corrosion, d'un siccatif, et/ou d'un stabilisant à l'égard de l'ultra-violet, et
98,25 à 87,5 % en poids, avantageusement
97,6 % à 92,3 % en poids
d'un diluant consistant en un solvant ou un mélange de solvants organique(s) chimique(s) ou en un mélange d'eau et d'un solvant ou d'un mélange de solvants organique(s) chimique(s) et d'au moins un émulsifiant et/ou un mouillant.

8. Concentré pour la conservation du bois et des matériaux ou objets en bois selon une ou plusieurs des revendications 1 à 5, caractérisé en ce que le concentré contient
0,15 à 4 % en poids, avantageusement
0,3 à 2 % en poids
du mélange des insecticides formé par l'ester α-cyano-3-phénoxybenzylique de l'acide 2,2-diméthyl-3-(2,2-dichlorovinyl)-cyclopropane-1-carboxylique et du (+) cis,trans-3-(2,2-dichlorovinyl)-2,2-diméthylcyclopropane-1-carboxylate de 3-phénoxy benzyle,
0,2 à 25 % en poids, avantageusement
3 à 8 % en poids
de 1-(4-chloro)-phényl-3-hydroxy-3-tert.-butyl-4-(1,2,4-triazol-1-yl)-butane et/ou de 1-[[2-(2,4-dichlorophényl)-4-propyl-1,3-dioxolanne-2-yl]méthyl]-1H-1,2,4-triazole,
3,5 à 50 % en poids, avantageusement
10 à 35 % en poids
d'au moins un liant organique chimique et/ou un agent de fixation ou un plastifiant ainsi qu'une partie restante consistant en un solvant ou un mélange de solvants organique(s) chimique(s) ou de l'eau et un solvant ou un mélange de solvants organique(s) chimique(s) et au moins un émulsifiant et/ou un mouillant ainsi qu'éventuellement des colorants, des pigments colorés, des agents de protection contre la corrosion, des siccatifs et/ou des stabilisants.

9. Concentré pour la conservation du bois et des matériaux ou objets en bois selon une ou plusieurs des revendications 1 à 5 et 8, caractérisé en ce que le concentré contient
0,15 à 4 % en poids, avantageusement
0,3 à 2 % en poids
du mélange des insecticides formé par l'ester α-cyano-3-phénoxybenzylique de l'acide 2,2-diméthyl-3-(2,2-dichlorovinyl)-cyclopropane-1-carboxylique et du (+)cis, trans-3,(2,2-dichlorovinyl)-2,2-diméthylcyclopropane carboxylate de 3-phénoxybenzyle selon un rapport pondéral de deux constituants allant de :
1 : 1,5 à 1,5, avantageusement
1:1,
0,2 à 25 % en poids, avantageusement
3 à 8 % en poids
de 1-(4-chloro)-phényl-3-hydroxy-3-tert.-butyl-4-(1,2,4-triazol-1-yl)-butane et/ou de 1-[[2-(2,4(dichlorophényl)-4-propyl-1,3-dioxolanne-2-yl]méthyl]-1H-1,2,4-triazole,
3,5 à 50 % en poids, avantageusement
10 à 35 % en poids
d'au moins un liant organique chimique et/ou un agent de fixation ou un plastifiant ainsi qu'une partie résiduelle consistant en un solvant ou un mélange de solvants organique(s) chimique(s) ou de l'eau et un solvant et un mélange de solvants organique(s) chimique(s) et au moins un émulsifiant et/ou mouillant ainsi qu'éventuellement des colorants, des pigments colorés, des agents de protection contre la corrosion, des siccatifs et/ou des agents de stabilisation à l'égard de l'ultra-violet.

10. Agent ou concentré pour la conservation du bois et des matériaux ou objets en bois, selon une ou plusieurs des revendications 1 à 9, caractérisé en ce que le 1-(4-chloro)-phényl-3-hydroxy-3-tert.-butyl-4-(1,2,4-triazol-1-yl)-butane et/ou le 1-[[2-(2,4-dichlorophényl)-4-propyl-1,3-dioxolanne-2-yl]méthyl-1H-1,2,4-triazole est remplacé
par 0 à 50 % en poids, avantageusement
par 0,5 à 25 % en poids
(par rapport à 100 % en poids de 1-(4-chloro)-phényl-3-hydroxy-3-tert.-butyl-4-(1,2,4-triazol-1-yl)-butane ou de 1-[2,2-(2,4-dichlorophényl)-4-propyl-1,3-dioxolanne-2-yl]méthyl]-1H-1,2,4-triazole mis en oeuvre) par la même quantité pondérale d'un autre fongicide, avantageusement un halogénure de dialkyl (en C₁₀-C₁₈) alkyl (en C₁ à C₅)benzylammonium ou un halogénure d'alkyl (en C₁₀-C₁₈) dialkyl (en C₁-C₅)benzylammonium.

11. Procédé de conservation du bois et des matériaux ou objets en bois, caractérisé en ce qu'on applique sur la surface du bois, par mètre carré de cette surface, environ 200 g de l'agent ou une fraction correspondante de cette quantité du concentré selon une ou plusieurs des revendications 1 à 10.
